# EUROPEAN PATENT APPLICATION

(11) **EP 3 842 226 A1**
(43) Date of publication of application: **30.06.2021**
(21) Application number: 19936702.0
(22) Date of filing: 01.11.2019
(51) Int. Cl.: B32B 5/02

(54) **POSITIONING LASER 3D FOUR-LAYER AIR-HEAT-PRESERVING AND AIR-PERMEABLE CHANNEL FABRIC AND PROCESSING METHOD THEREFOR**

(30) Priority: 09.07.2019 CN 201910613352
(71) Applicant: Suzhou Xingshichuang Textile Technology Research Co. Ltd, Suzhou, Jiangsu 215200 (CN)
(72) Inventor: WANG, Fangming, Suzhou, Jiangsu 215200 (CN); WANG, Xutao, Suzhou, Jiangsu 215200 (CN)
(74) Representative: Kluin, Jörg-Eden
(86) International application number: PCT/CN2019/114926
(87) International publication number: WO 2021/003901

(57) **Abstract**

The disclosure discloses a positioning laser 3D four-layer air thermal ventilation channel fabric and a method for processing the same. The disclosure is characterized by comprising a closed face cloth layer and a closed bottom cloth layer, wherein the closed face cloth layer comprises face base cloth, a pu environmental-friendly glue layer and a differentiated TPU polyurethane film from top to bottom, the closed bottom cloth layer successively comprises the differentiated TPU polyurethane film, the pu environmental-friendly glue layer and bottom lining cloth from top to bottom, and the face base cloth is provided with laser cutting points for laser visual recognition. During the processing, the closed face cloth layer and the closed bottom cloth layer are prefabricated, then channels on the fabric are glued, and finally patterns and ventilation points are cut by using laser. The disclosure has the advantages that down feathers are replaced with air in the channels, so the fabric of the disclosure is light and has no down feather running phenomenon, the cost is lower, and the air can be collected and freely released and is convenient for storage.

## Description

### TECHNICAL FIELD

The disclosure relates to fabric processing, particularly to a positioning laser 3D four-layer air thermal ventilation channel fabric and a method for processing the same.

### BACKGROUD OF THE PRESENT INVENTION

A downcoat is a coat filled with down feather fillers. It has a large and round shape. The downcoat generally has duck down that accounts for half or more of the downcoat in amounts. Meanwhile, some fine and small feathers are mixed in the downcoat. Duck downs are cleaned and disinfected at high temperature and then filled in clothes, so that the downcoat is formed. The downcoat has the best warmth retention. Most of them are worn by people in cold regions, and are also commonly used by polar investigators.

The downcoat is a coat filled with down feather fillers. It has a large and round shape. The downcoat generally has duck down that accounts for half or more of the downcoat in amounts. Meanwhile, some fine and small feathers are mixed in the downcoat. Duck downs are cleaned and disinfected at high temperature and then filled in clothes, so that the downcoat is formed. The fabric used for downcoats is a very important material, but the existing downcoat fabric has the following defects: it is not strong and durable and not easy to treat, and does not have anti-wrinkling and ironing-free characteristics; it does not have the function of insect repellent, and has poor comfort; it can not perfectly present letters, logos, patterns, etc., which leads to less fashion and trend, and the preparation wastes human resources; in view of this defect, it is necessary to design a 3D four-layer gluing channel thermal fabric.

### SUMMARY OF PRESENT INVENTION

The object of the disclosure is to, in view of the defects in the prior art, provide a positioning laser 3D four-layer air thermal ventilation channel fabric and a method for processing the same.

The technical solution is as follows: the disclosure provides a positioning laser 3D four-layer air thermal ventilation channel fabric, comprising: a closed face cloth layer and a closed bottom cloth layer, wherein the closed face cloth layer comprises face base cloth, a pu environmental-friendly glue layer and a differentiated TPU polyurethane film from top to bottom, the closed bottom cloth layer successively comprises the differentiated TPU polyurethane film, the pu environmental-friendly glue layer and bottom lining cloth from top to bottom, and the face base cloth is provided with laser cutting points for laser visual recognition.

Preferably, the face base cloth comprises woven or knitted double-face cloth of 20d, 30d, 50d, 70d and the like, or woven terylene, nylon, woolen and other elastic fabrics of 20d, 30d, 40d, 50d, 70d, 75d, 90d, 100d, 150d, 200d, 300d and the like.

Preferably, the bottom lining cloth comprises woven soft yarns of 30d, 50d and 75d, or single-face knitted fabrics of 20d, 30d, 50d and 75d.

Provided is a method for processing the positioning laser 3D four-layer air thermal ventilation channel fabric, comprising the following steps:
(1) adhering and compressing face base cloth, a differentiated TPU polyurethane film, bottom lining cloth and a differentiated TPU polyurethane film respectively through pu environmental-friendly glue layers to prefabricate a closed face cloth layer and a closed bottom cloth layer;
(2) fabricating a relief die matched with required patterns in advance using an engraving relief process according to pattern requirements on the positioning laser 3D four-layer air thermal ventilation channel fabric;
(3) respectively guiding the closed face cloth layer and the closed bottom cloth layer into upper and lower sides of the relief die using a 3D gluing machine, electrically heating the 3D gluing machine to 100∼200°C, applying a pressure to the 3D gluing machine after the temperature is sufficient to drive the relief die, after 0.1∼10s, pressing the film face of the closed face cloth layer and the film face of the closed bottom cloth layer, and when pressing, forming an opening of 5-8 cm at a specific location and mounting an intake valve at the opening;
(4) heating and pressurizing the film face of the closed face cloth layer and the film face of the closed bottom cloth layer which are both differentiated TPU polyurethane films, then hot melting and adhering, cooling hot molten and adhered parts of two layers of differentiated TPU polyurethane films by virtue of natural cooling or cooling roller assistance, thereby obtaining high-strength adhesion and fusion; and
(5) recognizing laser cutting points on the face base cloth through a laser visual recognition device, and cutting the positioning laser 3D four-layer air thermal ventilation channel fabric based on the cutting points, so as to obtain the required shape, patterns and ventilation points.

Preferably, the engraved patterns on the relief die can be in the shapes of dots, straight lines, horizontal bars, waves, sharp angle horizontal bars and eight characters, and the relief die can also be an aluminum plate and an iron or alloy round roller.

Compared with the prior art, the disclosure has the beneficial effects that
(1) air is used as a thermal insulation substrate instead of downs, the thermal insulation effect is better than that of down, and the texture is lighter, the product cost is lower, and meanwhile the problem of down running is also solved;
(2) The downcoat can be freely inflated and deflated, which is convenient for storage. After exhausting the air, the downcoat loses the effect of warmth retention, and can be daily worn in spring and autumn;
(3) By matching with the laser cutting points, the automatic precision cutting of laser visual recognition is realized, more delicate and beautiful patterns can be presented, and the fabric is more beautiful. At the same time, the extremely small cutting points can be cut, which is convenient for discharge of humidity while ensuring the warmth retention air-closing effect. The downcoat has dual effects of air-closing warmth retention and ventilation.

### DESCRIPTION OF THE DRAWINGS

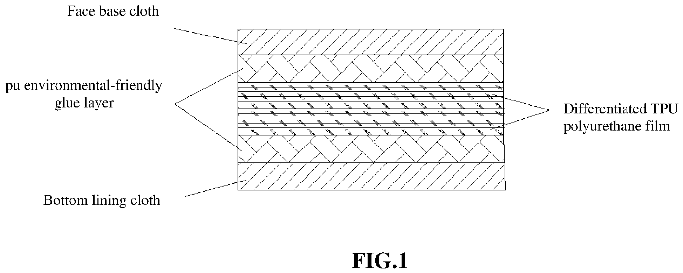

Fig.1 is a cross-sectional view of a structure of a positioning laser 3D four-layer air thermal ventilation channel fabric in a positioning laser 3D four-layer air thermal ventilation channel fabric and a method for processing the same according to the disclosure.

### DETAILED DESCRIPTION OF PREFERRED EMBODIMENTS

The technical solution of the disclosure will be described in detail by reference to drawings, but the protective scope of the disclosure is not limited to the examples.

A positioning laser 3D four-layer air thermal ventilation channel fabric comprises a closed face cloth layer and a closed bottom cloth layer, wherein the closed face cloth layer comprises face base cloth, a pu environmental-friendly glue layer and a differentiated TPU polyurethane film from top to bottom, the closed bottom cloth layer successively comprises the differentiated TPU polyurethane film, the pu environmental-friendly glue layer and bottom lining cloth from top to bottom, and the face base cloth is provided with laser cutting points for laser visual recognition.

The face base cloth comprises woven or knitted double-face cloth of 20d, 30d, 50d, 70d and the like, or woven terylene, nylon, woolen and other elastic fabrics of 20d, 30d, 40d, 50d, 70d, 75d, 90d, 100d, 150d, 200d, 300d and the like.

The bottom lining cloth comprises woven soft yarn of 30d, 50d and 75d, or single-face knitted fabrics of 20d, 30d, 50d and 75d.

Compared with the prior art, the disclosure has the beneficial effects that
(1) air is used as a thermal insulation substrate instead of downs, the thermal insulation effect is better than that of down, and the texture is lighter, the product cost is lower, and meanwhile the problem of down running is also solved;
(2) The downcoat can be freely inflated and deflated, which is convenient for storage. After exhausting the air, the downcoat loses the effect of warmth retention, and can be daily worn in spring and autumn;
(3) By matching with the laser cutting points, the automatic precision cutting of laser visual recognition is realized, more delicate and beautiful patterns can be presented, and the fabric is more beautiful. At the same time, the extremely small cutting points can be cut, which is convenient for discharge of humidity while ensuring the warmth retention air-closing effect. The downcoat has dual effects of air-closing warmth retention and ventilation.

In addition, compared with the existing polyurethane TPU, the differentiated TPU polyurethane film itself used in the positioning laser 3D four-layer air thermal ventilation channel fabric has more superior adhesion and closing properties.

A method for processing the positioning laser 3D four-layer air thermal ventilation channel fabric comprises the following steps:
(1) adhering and compressing face base cloth, a differentiated TPU polyurethane film, bottom lining cloth and the differentiated TPU polyurethane film respectively through pu environmental-friendly glue layers to prefabricate a closed face cloth layer and a closed bottom cloth layer;
(2) fabricating a relief die matched with required patterns in advance using an engraving relief process according to pattern requirements on the positioning laser 3D four-layer air thermal ventilation channel fabric;
(3) respectively guiding the closed face cloth layer and the closed bottom cloth layer into upper and lower sides of the relief die using a 3D gluing machine, electrically heating the 3D gluing machine to 100∼200°C, applying a pressure to the 3D gluing machine after the temperature is sufficient to drive the relief die, after 0.1∼10s, pressing the film face of the closed face cloth layer and the film face of the closed bottom cloth layer, and when pressing, forming an opening of 5-8 cm at a specific location and mounting an intake valve at the opening;
(4) heating and pressurizing the film face of the closed face cloth layer and the film face of the closed bottom cloth layer which are both differentiated TPU polyurethane films, then hot melting and adhering, cooling hot molten and adhered parts of two layers of differentiated TPU polyurethane films by virtue of natural cooling or cooling roller assistance, thereby obtaining high-strength adhesion and fusion; and
(5) recognizing laser cutting points on the face base cloth through a laser visual recognition device, and cutting the positioning laser 3D four-layer air thermal ventilation channel fabric based on the cutting points, so as to obtain the required shape, patterns and ventilation points.

The engraved patterns on the relief die can be in the shapes of dots, straight lines, horizontal bars, waves, sharp angle horizontal bars and eight characters, and the relief die can also be an aluminum plate and an iron or alloy round roller.

The above processing technology is used to achieve automatic production, which is high in production efficiency, simple and convenient in steps and good in product control ability, thereby effectively reducing defective percentages.

As described above, although the disclosure has been illustrated and expressed with reference to specific preferred embodiments, it should not be interpreted as limiting the disclosure itself. Various changes can be made in form and details without departing from the spirit and scope of the disclosure defined in the attached claims.

## Claims

1. A positioning laser 3D four-layer air thermal ventilation channel fabric, comprising: a closed face cloth layer and a closed bottom cloth layer, wherein the closed face cloth layer comprises face base cloth, a pu environmental-friendly glue layer and a differentiated TPU polyurethane film from top to bottom, the closed bottom cloth layer successively comprises the differentiated TPU polyurethane film, the u environmental-friendly glue layer and bottom lining cloth from top to bottom, and the face base cloth is provided with laser cutting points for laser visual recognition.

2. The positioning laser 3D four-layer air thermal ventilation channel fabric according to claim 1, wherein the face base cloth comprises woven or knitted double-face cloth of 20d, 30d, 50d, 70d and the like, or woven terylene, nylon, woolen and other elastic fabrics of 20d, 30d, 40d, 50d, 70d, 75d, 90d, 100d, 150d, 200d, 300d and the like.

3. The positioning laser 3D four-layer air thermal ventilation channel fabric according to claim 1, wherein the bottom lining cloth comprises woven soft yarns of 30d, 50d and 75d, or single-face knitted fabrics of 20d, 30d, 50d and 75d.

4. A method for processing the positioning laser 3D four-layer air thermal ventilation channel fabric according to claims 1-3, comprising the following steps:
(1) adhering and compressing a face base cloth and a differentiated TPU polyurethane film as well as bottom lining cloth and the differentiated TPU polyurethane film respectively through pu environmental-friendly glue layers to prefabricate a closed face cloth layer and a closed bottom cloth layer;
(2) fabricating a relief die matched with required patterns in advance using an engraving relief process according to pattern requirements on the positioning laser 3D four-layer air thermal ventilation channel fabric;
(3) respectively guiding the closed face cloth layer and the closed bottom cloth layer into upper and lower sides of the relief die using a 3D gluing machine, electrically heating the 3D gluing machine to 100∼200°C, applying a pressure to the 3D gluing machine after the temperature is sufficient to drive the relief die, after 0.1∼10s, pressing the film face of the closed face cloth layer and the film face of the closed bottom cloth layer, and when pressing, forming an opening of 5-8 cm at a specific location and mounting an intake valve at the opening;
(4) heating and pressurizing the film face of the closed face cloth layer and the film face of the closed bottom cloth layer which are both differentiated TPU polyurethane films, then hot melting and adhering, cooling hot molten and adhered parts of two layers of differentiated TPU polyurethane films by virtue of natural cooling or cooling roller assistance, thereby obtaining high-strength adhesion and fusion; and
(5) recognizing laser cutting points on the face base cloth through a laser visual recognition device, and cutting the positioning laser 3D four-layer air thermal ventilation channel fabric based on the cutting points, so as to obtain the required shape, patterns and ventilation points.

5. The method for processing the positioning laser 3D four-layer air thermal ventilation channel fabric according to claim 4, wherein the engraved patterns on the relief die can be in the shapes of dots, straight lines, horizontal bars, waves, sharp angle horizontal bars and eight characters, and the relief die can also be an aluminum plate and an iron or alloy round roller.
